# EUROPÄISCHE PATENTANMELDUNG

(11) **EP 1 538 727 A2**
(43) Veröffentlichungstag der Anmeldung: **08.06.2005**
(21) Anmeldenummer: 04027397.1
(22) Anmeldetag: 18.11.2004
(51) Int. Cl.: H02K 1/14

(54) **Bürstenlose elektrische Maschine**

(30) Priorität: 06.12.2003 DE 10357167
(71) Anmelder: LuK Lamellen und Kupplungsbau Beteiligungs KG, 77813 Bühl (DE)
(72) Erfinder: Hill, Wolfgang, 76135 Karlsruhe (DE)

(57) **Zusammenfassung**

Eine als Scheibenläufer ausgebildete bürstenlose elektrische Maschine weist ein Primärteil und ein Sekundärteil auf. Das Sekundärteil hat Permanentmagnete mit mehreren in einer Ebene angeordneten Polen. Das Primärteil weist einen weichmagnetischen Kern und eine Wicklung auf. Der weichmagnetische Kern hat einen Jochbereich und damit verbundene Zähne. Diese tragen Polschuhe, die zwischen den Zähnen gebildete Nuten überdecken. Der weichmagnetische Kern hat ein erstes, zumindest den Jochbereich aufweisendes Kernteil und ein damit verbundenes zweites, zumindest die Polschuhe aufweisendes Kernteil. Das erste Kernteil ist als Ringbandkern und das zweite Kernteil als Formkörper ausgebildet. Der Formkörper enthält weichmagnetische Partikel, zwischen denen ein elektrisch isolierender Werkstoff angeordnet ist.

## Beschreibung

Die Erfindung betrifft eine bürstenlose elektrische Maschine, die als Scheibenläufer mit einem Primärteil und einem Sekundärteil ausgebildet ist, wobei das Primärteil einen weichmagnetischen Kern und eine Wicklung aufweist, wobei der weichmagnetische Kern einen Jochbereich und damit verbundene Zähne hat, die Polschuhe aufweisen, welche zwischen den Zähnen gebildete Nuten überdecken, und wobei das Sekundärteil Permanentmagnete mit mehreren in einer Ebene angeordneten Polen aufweist.

Eine derartige, als Elektromotor ausgebildete elektrische Maschine ist aus der Praxis bekannt. Sei hat als Primärteil einen Stator und als Sekundärteil einen Scheibenrotor. Der Stator weist einen aus einem weichmagnetischen Blechband gewickelten Ringbandkern auf, der in radialer Richtung mehrere übereinanderliegende Blechschichten hat. Zur Reduzierung von Wirbelstromverlusten ist das Blechband an einer seiner Flachseiten mit einer elektrisch isolierenden Beschichtung versehen, welche die einzelnen Blechschichten in radialer Richtung elektrisch gegeneinander isoliert. Der Ringbandkern weist an seiner dem Scheibenrotor zugewandten Flachseite radial zur Rotationsachse des Elektromotors verlaufende Nuten auf, in denen eine Wicklung angeordnet ist. Zwischen den Nuten sind Zähne gebildet, die beidseits der Nuten Polschuhe haben, welche den Nutraum teilweise überdecken. Zwischen den Polschuhen der einzelnen Nuten ist jeweils ein Nutschlitz gebildet, durch den die Polschuhe voneinander beabstandet sind. Bei der Herstellung des Ringbandkerns werden zunächst die Bereiche, in denen später die Nuten und die Nutschlitze angeordnet sind, aus dem zunächst noch etwa steifenförmigen Blechband ausgestanzt. Dabei wird der Abstand zwischen den in das Band eingebrachten Stanzöffnungen, ausgehend von dem Ende des Blechstreifens, das später an der Innenseite des Ringbandkerns angeordnet ist, zu dem gegenüberliegenden anderen Ende des Blechstreifens entsprechend der Zunahme des Durchmessers, an dem die Stanzöffnungen nach dem Wickeln des Ringbandkerns angeordnet sind, kontinuierlich erhöht, derart, dass die einer Nut zugeordneten Stanzöffnungen nach dem Wickeln des Ringbandkerns in radialer Richtung zueinander fluchten. Das Einhalten der korrekten Abstände zwischen den ausgestanzten Blechstreifenbereichen und das Wickeln des Blechstreifens mit zueinander fluchtenden Stanzöffnungen ist vor allem bei kleinen Ringbandkernen relativ aufwändig und schwierig. Da die Anforderungen an die Fertigungsgenauigkeit mit zunehmender Polpaarzahl und abnehmendem Durchmesser des Ringbandkerns ansteigen, lassen sich auf diese Weise elektrische Maschinen, die einen kleinen Ringbandkern aufweisen, bei vertretbarem Aufwand nur mit geringer Polpaarzahl herstellen. Eine geringe Polpaarzahl bedeutet einerseits einen relativ großen Abstand zwischen zueinander benachbarten Nuten. Andererseits muss aber auch der Jochbereich bei einer großen Polteilung in axialer Richtung mit einer entsprechend dicken Wandstärke dimensioniert werden. Dadurch ergeben sich in axialer Richtung relativ große Abmessungen der elektrischen Maschine, was insbesondere nachteilig ist, wenn für die elektrische Maschine nur wenig Bauraum zur Verfügung steht. Vor allem bei elektrischen Maschinen, die in einer Verstelleinrichtung eines Kraftfahrzeugs eingebaut werden soll, ist dies ungünstig.

Man kennt auch bereits eine elektrische Maschine der eingangs genannten Art, die einen weichmagnetischen Kern aus gepresstem Eisenpulver aufweist. Bei der Herstellung der Maschine wird das Eisenpulver unter Einwirkung von Wärme und Druck zu einem formstabilen Formteil geformt. Neben den höheren Materialkosten für den weichmagnetischen Kern hat diese elektrische Maschine den Nachteil, dass das Eisenpulver gegenüber kristallinen weichmagnetischen Werkstoffen wesentlich schlechtere magnetische Eigenschaften aufweist. Die magnetische Leitfähigkeit oder Permeabilität von gepressten Eisenpulverkernen liegt um etwa den Faktor 100 unter dem Wert, den gute Elektrobleche erreichen.

Es besteht deshalb die Aufgabe, eine elektrische Maschine der eingangs genannten Art zu schaffen, die einen weichmagnetischen Kern mit kompakten Abmessungen und guten magnetischen Eigenschaften aufweist, die aber dennoch kostengünstig herstellbar ist.

Diese Aufgabe wird dadurch gelöst, dass der weichmagnetische Kern ein erstes, zumindest den Jochbereich aufweisendes Kernteil und ein damit verbundenes zweites, zumindest die Polschuhe aufweisendes Kernteil hat, dass das erste Kernteil als Ringbandkern ausgebildet ist, und dass das zweite Kernteil als Formkörper ausgebildet ist, der weichmagnetische Partikel enthält, zwischen denen ein elektrisch isolierender Werkstoff angeordnet ist.

Der weichmagnetische Kern ist als aus mindestens zwei Teilen zusammengesetzt, nämlich dem Ringbandkern und dem weichmagnetischen Formkörper. In vorteilhafter Weise ermöglicht dabei der Ringbandkern eine gute magnetische Leitfähigkeit des weichmagnetischen Kerns. Durch den weichmagnetischen Formkörper lässt sich der weichmagnetische Kern in Serienfertigung kostengünstig mit kleiner Polteilung und kompakten Abmessungen herstellen. Durch die kleine Polteilung kann der weichmagnetische Kern in axialer Richtung eine kurze Baulänge aufweisen. Die erfindungsgemäße elektrische Maschine ermöglicht dadurch eine flache Bauform. Der magnetische Widerstand im Magnetkreis ist gegenüber einem weichmagnetischen Kern, der vollständig aus kristallinem Eisen besteht, durch den weichmagnefischen Formkörper nur unwesentlich erhöht. Die erfindungsgemäße elektrische Maschine ermöglicht eine hohe Leistungsdichte und niedrige Magnetkosten. Durch die Flussführung in den weichmagnetischen Zähnen werden Wirbelstromverluste in der Wicklung weitestgehend vermieden. Die Wicklungsspulen der Wicklung können direkt auf die Zähne gewickelt werden. Vorzugsweise werden sie jedoch als Formspulen auf einen separaten Wickelkörper aufgewickelt, von diesem abgezogen und dann als fertige Wicklungsspulen auf die Zähne aufgesteckt. Danach werden die Kernteile miteinander verbunden. Die Montage der elektrischen Maschine wird dadurch zusätzlich vereinfacht.

Bei einer vorteilhaften Ausführungsform der Erfindung ist das zweite Kernteil als Eisenpulverpressteil ausgebildet, welches Eisenpulver-Partikel aufweist, die mit dem elektrisch isolierenden Werkstoff beschichtet sind. Ein derartiges Eisenpulverpressteil kann mit Hilfe eines entsprechenden Formwerkzeugs unter Einwirkung von Wärme und Druck aus Eisenpulverpartikeln hergestellt werden, die mit einer elektrisch isolierenden Beschichtung versehen sind, vorzugsweise einer Eisenoxidschicht. In dem Formwerkzeug werden die Eisenpulverpartikel zu einem formstabilen Formkörper miteinander verbacken. Dabei bleibt die Beschichtung der Eisenpulverpartikel weitgehend erhalten, so dass diese weiterhin zumindest bereichsweise elektrisch gegeneinander isoliert sind. Wirbelstromverluste in dem Eisenpulverpressteil werden dadurch weitestgehend vermieden.

Bei einer anderen vorteilhaften Ausführungsform der Erfindung ist das zweite Kernteil als Spritzgussteil ausgebildet, das in eine elektrisch isolierende Kunststoffmasse eingebettete weichmagnetische Partikel aufweist. Dabei sind die weichmagnetischen Partikel, die vorzugsweise als Eisenpulverkörner ausgebildet sind, durch die sie umgebende Kunststoffmasse fest miteinander verbunden.

Vorteilhaft ist, wenn das zweite Kernteil als vorzugsweise ringförmige Scheibe ausgebildet ist, die etwa parallel zur Erstreckungsebene des Sekundärteils zwischen diesem und dem ersten Kernteil angeordnet ist. Die Polschuhe der einzelnen Zähne des weichmagnetischen Kerns sind dabei einstückig miteinander verbunden, was bei der Fertigung der elektrischen Maschine eine einfache Montage der Kernteile des weichmagnetischen Kerns ermöglicht.

Bei einer zweckmäßigen Ausgestaltung der Erfindung sind die einer Nut jeweils zugeordneten Polschuhe der beidseits der betreffenden Nut angeordneten Zähne an ihren einander zugewandten Endbereichen einstückig miteinander verbunden, wobei das zweite Kernteil an seiner dem Sekundärteil abgewandten Seite im Bereich dieser Polschuhe jeweils eine Vertiefung aufweist, an der die Wandstärke des zweiten Kernteils jeweils in Umfangsrichtung ausgehend vom Rand der Nut zu dem davon beabstandeten Ende des Polschuhs hin abnimmt. Durch die einstückig miteinander verbundenen Polschuhe wird eine gute mechanische Festigkeit der die Polschuhe aufweisenden Scheibe ermöglicht, so dass diese bei der Montage des weichmagnetischen Kerns gut handhabbar ist. Durch die Vertiefung wird der magnetische Streufluss zwischen zueinander benachbarten, an unterschiedlichen Zähnen angeordneten Magnetpolen reduziert.

Bei einer bevorzugten Ausführungsform der Erfindung sind die Vertiefungen rillenförmig vorzugsweise mit keilförmigen Schrägen ausgebildet und verlaufen etwa parallel zu den Zähnen. Durch diese Maßnahme wird eine weitgehend gleichmäßige magnetische Durchflutung der Polschuhe erreicht. Starke Magnetfeldpulsationen und eine damit verbundene Schwingungsanregung sowie Geräusche und Verluste werden vermieden.

Vorteilhaft ist, wenn die Wandstärke des zweiten Kernteils entlang der Vertiefungen jeweils ausgehend vom radial inneren zum radial äußeren Ende der Vertiefungen hin abnimmt. Dadurch kann eine noch größere mechanische Festigkeit des zweiten Kemteils erreicht werden. Der im Bereich des radial inneren Endes der einzelnen Vertiefungen wegen der dort größeren axialen Wandstärke des zweiten Kernteils erhöhte magnetische Streufluss zwischen zueinander benachbart nebeneinander angeordneten Zähnen wird zumindest teilweise dadurch kompensiert, das bei konstanter Nutbreite und konstanter Wandstärke des zweiten Kernteils die magnetische Flussdichte in den Polschuhen mit abnehmendem Abstand zur Rotationsachse der elektrischen Maschine zunimmt, d.h. am radial inneren Ende der Vertiefungen ist die magnetische Flussdichte größer als am radial äußeren Ende der Vertiefungen.

Bei einer zweckmäßigen Ausgestaltung der Erfindung sind die rillenförmigen Vertiefungen des zweiten Kernteils mit einer verfestigten Vergussmasse geringer magnetischer Permeabilität befüllt. Dadurch kann eine noch größere mechanische Stabilität und eine entsprechend reduzierte Bruchgefahr des zweiten Kernteils erreicht werden. Die Vergussmasse wird vorzugsweise unmittelbar nach dem Press- oder Spritzgießvorgang des zweiten Kernteils bei geöffnetem Formwerkzeug in flüssiger oder breiiger Form in die Vertiefungen eingefüllt. Nach dem Verfestigen der Vergussmasse wird das zweite Kernteil aus dem Formwerkzeug entnommen.

Vorteilhaft ist, wenn die Zähne jeweils vollständig an dem zweiten Kernteil angeordnet sind und wenn der Ringbandkern ungenutet ist und an seiner den Polschuhen zugewandten Flachseite mit den von den Polschuhen entfernten Enden der Zähne verbunden ist. Die als Scheibenläufer bzw. Axialflussmaschine ausgebildete elektrische Maschine ist dann besonders kostengünstig herstellbar. Das zweite Kernteil wird vorzugsweise als Pressteil in einem zweistufigen Werkzeug hergestellt, wobei in einer ersten Stufe ein erster Pressstempel die dünnwandigen Nutschlitzbereiche verdichtet und nach dem Einfüllen zusätzlichen Eisenpulvers ein zweiter Stempel die Zahnbereiche verdichtet. Alternativ kann auf das Nachfüllen des Eisenpulvers verzichtet werden, wenn die beiden Stempel von unterschiedlichen Seiten das Eisenpulver verdichten.

Bei einer anderen Ausführungsform der Erfindung sind Teilbereiche der Zähne einstückig mit dem Jochbereich ausgebildet, wozu das erste Kernteil an seiner dem Sekundärteil zugewandten Flachseite Nuten aufweist, zwischen denen die Teilbereiche gebildet sind. In dem Magnetkreis ergibt sich dann ein noch geringerer magnetischer Widerstand. Bei kleinen Ringbandkernen werden die Nuten bevorzugt durch Lasererodieren und bei größeren Ringbandkernen durch Bandstanzen in das Eisenband des Ringbandkerns eingearbeitet.

Vorteilhaft ist, wenn das zweite Kernteil zwischen in Umfangsrichtung zueinander benachbarten Vertiefungen jeweils mindestens eine Unterbrechung aufweist, und wenn die einstückig mit dem Jochbereich ausgebildeten Teilbereiche der Zähne mit ihren freien Enden in die Unterbrechungen eingreifen. Die Kernteile des weichmagnetischen Kerns sind dann formschlüssig miteinander verbunden.

Vorteilhaft ist, wenn die den einzelnen Nuten zugeordneten Polschuhe jeweils durch einen Nutschlitz voneinander beabstandet sind, und wenn die Polschuhe vorzugsweise am radial inneren und/oder äußeren Rand des zweiten Kernteils durch wenigstens einen Quersteg einstückig miteinander verbunden sind. Durch die Nutschlitze ergibt sich zwischen zueinander benachbarten Polschuhen unterschiedlicher Zähne ein noch geringerer magnetischer Streufluss. Dennoch sind die Polschuhe durch den wenigstens einen Quersteg einstückig miteinander verbunden, was eine einfache Montage der Polschuhe an dem ersten Kernteil ermöglicht. Der Quersteg ist vorzugsweise ringförmig ausgebildet und an dem in radialer Richtung inneren Rand des zweiten Kernteils angeordnet, weil dort die magnetische Flussdichte bei einer elektrischen Maschine mit konstanter Nutbreite größer ist als am äußeren Rand des zweiten Kernteils. Der wenigstens einen Quersteg weist vorteilhaft lange Fasern als Verstärkung auf.

Bei einer zweckmäßigen Ausgestaltung der Erfindung weist das zweite Kernteil vorzugsweise als Blechpakete ausgebildete weichmagnetische Blecheinlagen auf, die vorzugsweise mit den weichmagnetischen Partikeln und dem zwischen ihnen befindlichen elektrisch isolierenden Werkstoff ummantelt sind. Der weichmagnetische Kern weist dann einen noch kleineren magnetischen Widerstand auf. Außerdem erhöhen die Blecheinlagen die mechanische Stabilität des zweiten Kernteils. Der die weichmagnetischen Blecheinlagen enthaltende elektrisch isolierende Werkstoff kann mittels eines Spritzgussprozesses auf die Blechpakete aufgebracht werden. Durch den Spritzguss weist das zweite Kernteil exakte Abmessungen auf. Die Blecheinlagen können beim Pressen bzw. Spritzen des zweiten Kernteils in das Formwerkzeug eingelegt sein, so dass sie beim Press- bzw. Spritzvorgang mit der aus den weichmagnetischen Partikeln und dem zwischen ihnen befindlichen elektrisch isolierenden Werkstoff bestehenden Spritzgussmasse ummantelt werden. Zum Herstellen der blockförmigen Blechpakete werden vorzugsweise ohne Verschnitt aus einem Stahlband Blechstreifen herausgestanzt und danach paketiert. Die Blechstreifen weisen bevorzugt ein Kantenverhältnis auf, das einen Transport als Schüttgut und die anschließende Vereinzelung in einem Montageautomaten erlaubt. Vorzugsweise werden die Blechstreifen aus einem kornorientierten Blechband ausgestanzt, das vor dem Stanzen schräg gewalzt wird. Die Blechstreifen weisen hierdurch eine Keilform auf, die beim Vereinzeln ihr Ausrichten erleichtert. Zum Ausrichten können die keilsegmentförmigen Blechstreifen in einen Spalt einer Vereinzelungsanlage fallen, der größer ist als die kleine Abmessung der Blechstreifen, aber kleiner ist als deren große Abmessung. Beide Seiten des Spalts können hin- und herbewegt werden, um die Blechstreifen unter Ausnutzung der Schwerkraft auszurichten. Auf diese Weise ausgerichtet, gelangen die Blechstreifen auf ein Förderband, in das eine Permanentmagnetfolie eingearbeitet ist, die eine Lageänderung der Blechstreifen verhindert. Gegebenenfalls können falsch ausgerichtete Blechstreifen mit Hilfe einer optischen Kontrollvorrichtung erkannt, ausgesondert und dann der Vereinzelungsanlage erneut zugeführt werden. Lagerichtig angeordnete Blechstreifen gelangen in eine Halterung, aus der sie Greifer eines Bestückungsautomaten entnehmen. Das Formwerkzeug zum Herstellen des weichmagnetischen Formkörpers wird mit hoher Geschwindigkeit mit den Blechstreifen bestückt, wobei die Blechstreifen in Umfangsrichtung der Formhöhlung des Formwerkzeugs geschichtet angeordnet und von einem Greifen an ihren radialen Enden gehalten werden, während sie mit dem aus den weichmagnetischen Partikeln und dem elektrisch isolierenden Werkstoff bestehenden Masse umspritzt werden. Die radialen Enden der Blechpakete werden nur an der Luftspaltseite und an ihren Stirnseiten umspritzt. So können sie in dem Formwerkzeug fixiert werden.

Vorteilhaft ist, wenn die Nuten mit einem elektrisch und magnetisch isolierenden, verfestigten Vergusswerkstoff befültt sind, der die Kernteile und die Wicklung fest miteinander verbindet. Der Vergusswerkstoff kann ein Gießharz sein.

Nachfolgend sind Ausführungsbeispiele der Erfindung anhand der Zeichnungen näher erläutert. Es zeigen:
Fig. 1 einen Radialschnitt durch eine als Axialflussmaschine oder Scheibenläufer ausgebildete elektrische Maschine,
Fig. 2 einen Querschnitt durch das Primärteil der in Fig. 1 gezeigten elektrischen Maschine,
Fig. 3 einen Teilquerschnitt durch einen weichmagnetischen Kern eines Primärteils einer elektrischen Maschine, wobei der Jochbereich des Kerns durch einen Ringbandkern und die Zähne des Kerns durch einen weichmagnetische Partikel enthaltenden scheibenförmigen Formkörper gebildet sind, und wobei die Querschnittsebene in Umfangsrichtung des Kerns verläuft,
Fig. 4 einen Teilquerschnitt ähnlich Fig. 3, wobei jedoch der Ringbandkern mit Nuten versehen ist,
Fig. 5 einen Teilquerschnitt ähnlich Fig. 4, wobei jedoch die durch den Ringbandkern gebildeten Teilbereiche der Zähne jeweils bis zum Luftspalt der elektrischen Maschine verlängert sind,
Fig. 6 eine Aufsicht auf die dem Ringbandkern zugewandte Seite des Formkörpers der in Fig. 3 gezeigten der elektrischen Maschine,
Fig. 7 eine Aufsicht auf einen Durchbrüche für den Eingriff der Zähne des Ringbandkerns aufweisenden Formkörper,
Fig. 8 eine Aufsicht auf ein weiteres Ausführungsbeispiel eines Ringbandkerns,
Fig. 9 eine Aufsicht auf einen Formkörper, der Nutschlitze hat,
Fig. 10 einen Teilquerschnitt durch einen weichmagnetischen Kern eines Primärteils, dessen Formkörper Nutschlitze aufweist,
Fig. 11 eine Aufsicht auf einen Formkörper, der Blechpakete aufweist, die mit einer weichmagnetische Partikel enthaltenden Kunststoffmasse umspritzt sind,
Fig. 12 und 14 eine Aufsicht auf einen Formkörper, der Blechpakete aufweist, die mit einer weichmagnetische Partikel enthaltenden Kunststoffmasse umspritzt sind,

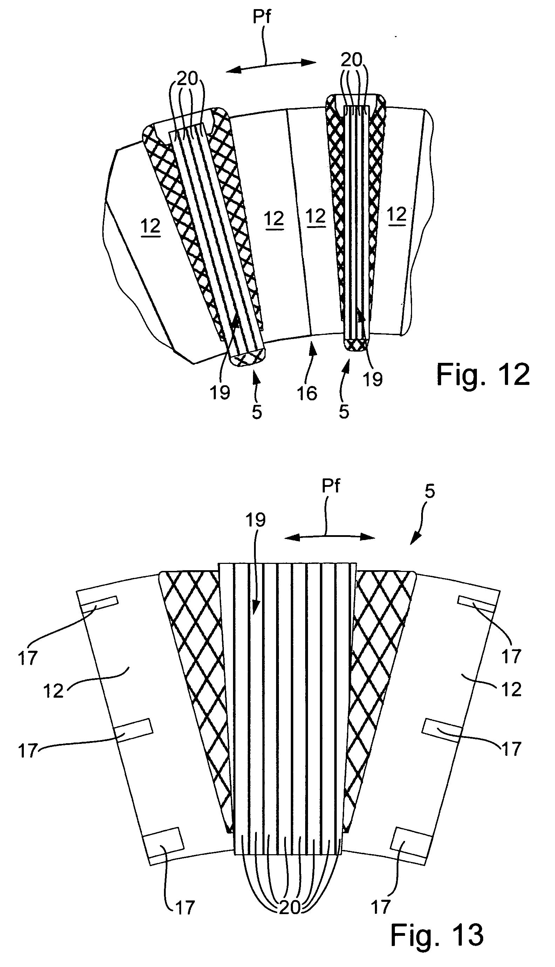

Fig. 12 einen vergrößerten Ausschnitt von Fig. 12, in dem die Blechpakete besonders gut erkennbar sind, und

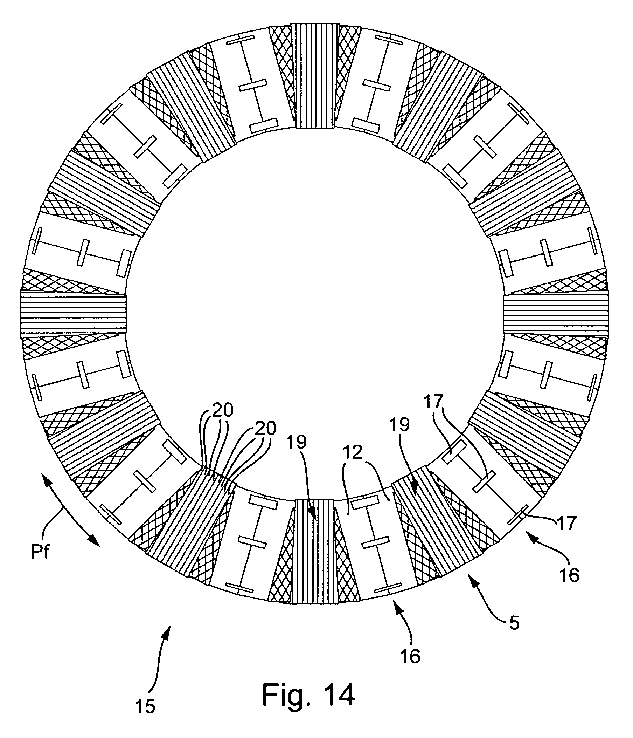

Fig. 13 einen vergrößerten Ausschnitt von Fig. 14.

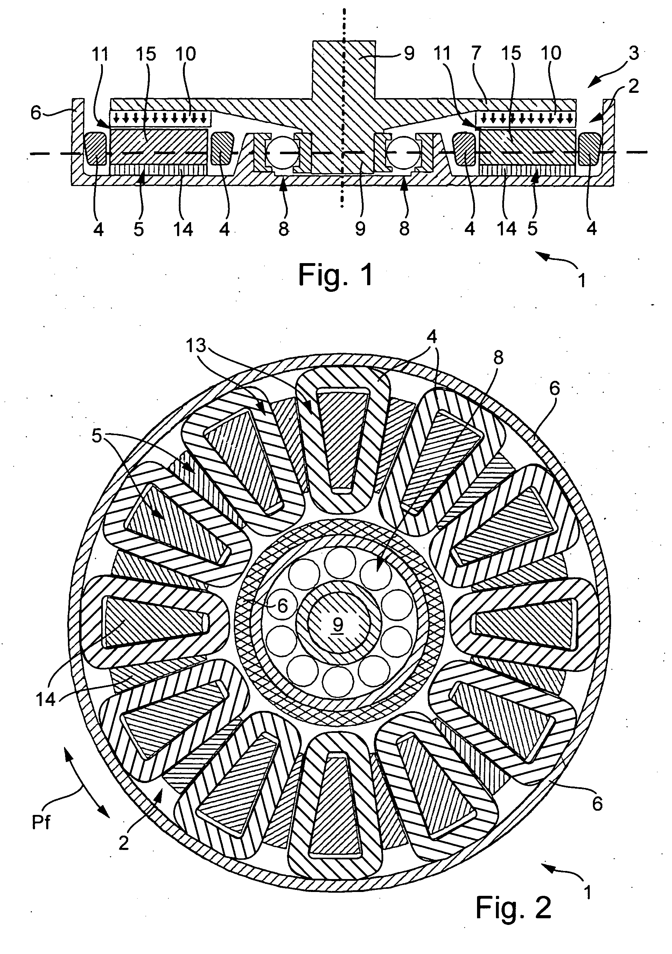

Eine in Fig. 1 im Ganzen mit 1 bezeichnete, als Scheibenläufer ausgebildete bürstenlose elektrische Maschine weist ein Primärteil 2 und ein Sekundärteil 3 auf. Das als Stator ausgebildete Primärteil 2 hat einen weichmagnetischen Kern, der eine mehrphasige Wicklung 4 trägt, die zur Erzeugung eines magnetischen Wanderfelds mit einer Drehstromquelle verbindbar ist.

Wie in Fig. 2 besonders gut erkennbar ist, weist der weichmagnetische Kern Zähne 5 auf, die jeweils eine Wicklungsspule der Wicklung 4 aufnehmen. Die Zähne 5 sind durch einen in der durch den Doppelpfeil Pf angedeuteten Umfangsrichtung ringförmig umlaufenden Jochbereich des weichmagnetischen Kerns miteinander verbunden. Der weichmagnetische Kern und die Wicklung 4 sind in der Innenhöhlung eines Gehäusetopfs 6 angeordnet. In Fig. 1 ist erkennbar, dass der Jochbereich des weichmagnetischen Kerns mit seiner der Wicklung 4 abgewandten Rückseite flächig am Boden des Gehäusetopfs 6 anliegt.

In Fig. 1 ist erkennbar, dass das Sekundärteil 3 ein etwa scheibenförmiges Rotorteil 7 aufweist, das über eine als Vierpunktlagerung ausgebildete Wälzlagerung 8 drehbar an dem Gehäusetopf 6 gelagert ist. Der Gehäusetopf 6 weist dazu an seinem Boden etwa mittig eine Aufnahme auf, in welche die Wälzlagerung 8 eingesetzt ist. Ein äußerer Lagering der Wälzlagerung 8 liegt an der Aufnahme des Gehäusetopfs 6 und ein innerer Lagering der Wälzlagerung 8 an einem Abschnitt einer mit dem Rotorteil 7 verbundenen Welle 9 an.

In Fig. 1 ist weiter erkennbar, dass an der dem weichmagnetischen Kern zugewandten Flachseite des Rotorteils 7 mehrere Permanentmagnete 10 angeordnet sind, die in Umfangsrichtung Pf hintereinander abwechselnd magnetische Nord- und Südpole bilden, die über einen zwischen den Permanentmagneten 10 und dem weichmagnetischen Kern befindlichen Luftspalt 11 mit dem magnetischen Wanderfeld der Wicklung 4 zur Erzeugung einer Drehbewegung des Rotorteils 7 zusammenwirken. Die Permanentmagnete 10 können in radialer Richtung einen Überhang über den weichmagnetischen Kern aufweisen, d.h. sie stehen nach innen oder außen über diesen über.

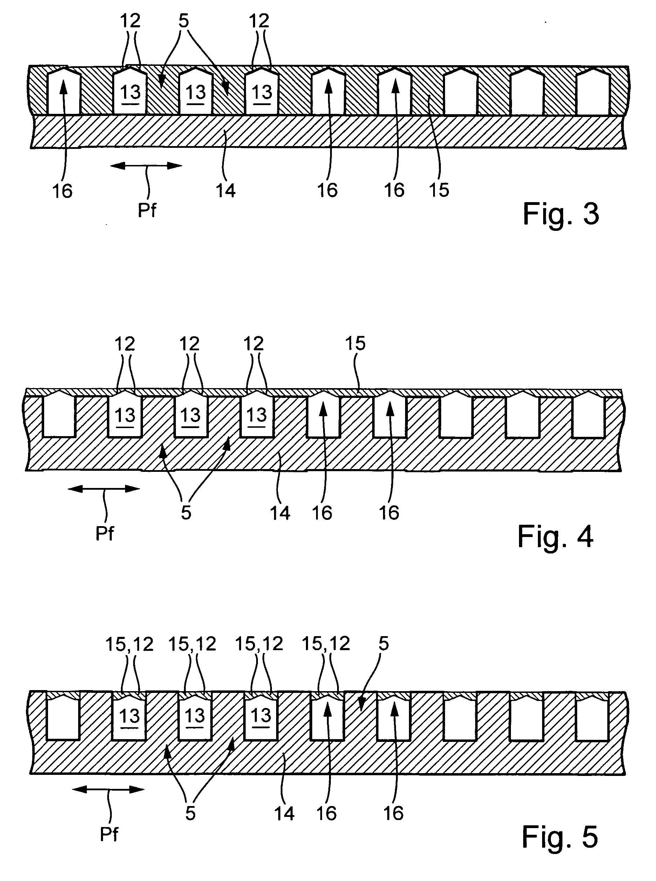

Wie in Fig. 3 bis 5 und 10 erkennbar ist, weisen die Zähne 5 des weichmagnetischen Kerns jeweils beidseits Polschuhe 12 auf, welche an den Luftspalt 11 angrenzen und zwischen den Zähnen 5 gebildete, die Wicklung 4 aufnehmende Nuten 13 überdecken.

Bei den in der Zeichnung gezeigten Ausführungsbeispielen haben die Nuten 13 in radialer Richtung einen konstanten Querschnitt. Es ist aber auch denkbar, dass der Querschnitt der Nuten 13 bei einer elektrischen Maschine mit Stabwicklung in radialer Richtung von innen nach außen hin zunimmt. Der Querschnitt der Wicklungsstäbe nimmt dann in entsprechender Weise in radialer Richtung von innen nach außen hin zu.

Der weichmagnetische Kern hat ein erstes, zumindest den Jochbereich aufweisendes Kernteil 14 und ein damit verbundenes zweites, zumindest die Polschuhe 12 aufweisendes Kernteil 15. Das erste Kernteil 14 ist als Ringbandkern aus einem weichmagnetischen Blechband ausgebildet. Der Ringbandkern hat in radialer Richtung mehrere aufeinanderliegende, in der Zeichnung nicht näher dargestellte weichmagnetische Schichten, die durch Abschnitte des Blechbands gebildet sind. Zwischen zueinander benachbarten Schichten ist zur Reduzierung der durch das magnetische Wanderfeld in dem Ringbandkern hervorgerufenen Wirbelstromverluste jeweils eine dünne Isolationsschicht angeordnet, die beispielsweise eine Siliziumdioxidschicht sein kann.

Das zweite Kernteil 15 ist als Formkörper ausgebildet ist, der weichmagnetische Partikel enthält, zwischen denen ein elektrisch isolierender Werkstoff angeordnet ist. Bei einer ersten Ausführungsform der Erfindung ist das zweite Kernteil als Eisenpulverpressteil ausgebildet, das Eisenpulver-Partikel enthält, die mit dem elektrisch isolierenden Werkstoff beschichtet sind. Bei dieser Ausführungsform wird zunächst ein Eisenpulver bereitgestellt, dessen Partikel oder Körner an ihrer Oberfläche eine elektrisch isolierenden Beschichtung aufweisen. Das Eisenpulver wird dann in die Innenhöhlung eines Formwerkzeugs eingefüllt, in dem es unter Einwirkung von Wärme derart zu dem Formkörper verpresst wird, dass die Partikel formschlüssig miteinander verbunden sind. Dabei bleibt die Beschichtung der Eisenpulverpartikel weitgehend erhalten, so dass die Partikel durch die Beschichtung weiterhin zumindest bereichsweise elektrisch gegeneinander isoliert sind. Wirbelstromverluste in dem Eisenpulverpressteil werden dadurch weitestgehend vermieden.

Bei einer zweiten Ausführungsform der Erfindung ist das zweite Kernteil 15 als Spritzgussteil ausgebildet, das eine Vielzahl von weichmagnetischen Partikeln enthält, die in eine elektrisch isolierende Kunststoffmasse eingebettet sind. Ein derartiges Kernteil 15 kann in Serienfertigung kostengünstig mit Hilfe eines Formwerkzeugs in Spritzgusstechnik hergestellt werden. Die Abmessungen der weichmagnetischen Partikel sind derart gewählt, dass diese zusammen mit der in flüssigem Zustand befindlichen Kunststoffmasse mit Hilfe einer Spritzdüse in das Formwerkzeug eingespritzt werden können. Nach dem Erstarren und/oder Aushärten der Kunststoffmasse hält diese die weichmagnetischen Partikel zusammen.

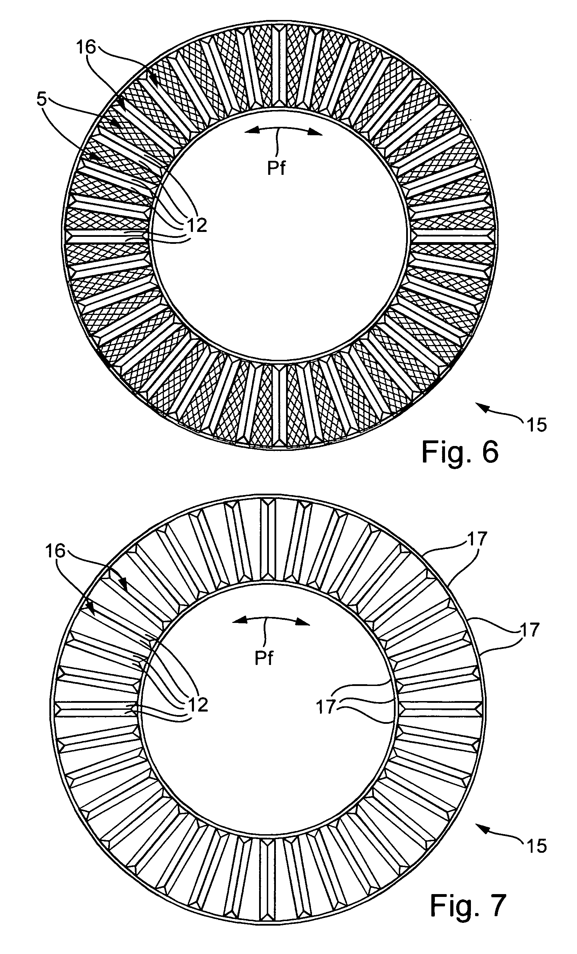

In Fig. 6 und 7 ist erkennbar, dass das zweite Kernteil 15 als ringförmige Scheibe ausgebildet ist. Diese ist etwa parallel zur Erstreckungsebene des Sekundärteils 3 zwischen diesem und dem ersten Kernteil 14 angeordnet.

Bei den Ausführungsbeispielen nach Fig. 3 bis 5 sind die den einzelnen Nuten 13 jeweils zugeordneten Polschuhe 12 der beidseits der Nuten 13 angeordneten Zähne 5 an ihren einander zugewandten Endbereichen einstückig miteinander verbunden. Dabei nimmt die axiale Wandstärke der Polschuhe 12, jeweils in Umfangsrichtung Pf ausgehend vom Rand der Nut 13 zur Mitte der Nut 13 hin ab. Deutlich ist erkennbar, dass dies dadurch erreicht wird, dass die einer Nut 13 jeweils zugeordneten Polschuhe 12 an ihrer der Nut 13 zugewandten Seite Keilschrägen aufweisen, die Vertiefungen 16 bilden. In Fig. 6 und 7 ist erkennbar, dass sich diese Vertiefungen 16 in radialer Richtung erstrecken.

Bei dem in Fig. 3 und 6 gezeigten Ausführungsbeispiel sind die Zähne 5 jeweils vollständig an dem zweiten Kernteil 15 angeordnet. Das durch den Ringbandkern gebildete erste Kernteil 14 ist ungenutet ausgebildet und an seinem Außenumfang jeweils flächig mit den von den Polschuhen 12 entfernten Enden der Zähne 5 verbunden. Der Ringbandkern ist dadurch besonders kostengünstig herstellbar.

Bei dem Ausführungsbeispiel nach Fig. 4 sind Teilbereiche der Zähne 5 einstückig mit dem ersten Kernteil 14 ausgebildet. Das erste Kernteil 14 weist dazu an seiner dem Sekundärteil 3 zugewandten Flachseite Abschnitte der Zähne 5 auf. Deutlich ist erkennbar, dass die dem Sekundärteil 3 zugewandten Endbereiche der Zähne 5 mit den daran angeordneten Polschuhen 12 durch das zweite Kernteil 15 gebildet ist. Dieses erstreckt sich in Umfangsrichtung Pf unterbrechungsfrei sowohl über die Nuten 13 als auch über die an dem ersten Kernteil 14 angeordneten Abschnitte der Zähne 5. Das zweite Kernteil 15 hat eine der Anzahl der Zähne 5 entsprechende Anzahl von einstückig miteinander verbundenen Segmenten, die in der Querschnittsebene von Fig. 4 jeweils etwa trapezförmig ausgebildet sind.

Bei dem in Fig. 5 gezeigten Ausführungsbeispiel weist das zweite Kernteil 15 zwischen in Umfangsrichtung Pf zueinander benachbarten Vertiefungen 16 jeweils eine Unterbrechung bzw. einen Durchbruch auf. Die Durchbrüche erstrecken sich in radialer Richtung jeweils über die gesamte Länge der Zähne 5. Die an dem ersten Kernteil 14 angeordneten Abschnitte der Zähne 5 sind gegenüber dem Ausführungsbeispiel nach Fig. 4 in einer normal zur Erstreckungsebene des ersten Kernteils 14 angeordneten Richtung bis zum Luftspalt 11 verlängert und greifen mit ihren dem Sekundärteil 3 zugewandten freien Endbereichen jeweils formschlüssig in einen Durchbruch des zweiten Kernteils 15 ein. Die an dem ersten Kernteil 14 angeordneten Abschnitte der Zähne 5 haben jeweils einen etwa rechteckigen Querschnitt. Seitlich sind die freien Endbereiche der Zähne 5 flächig mit den ihnen jeweils zugeordneten Polschuhen 12 des zweiten Kernteils 15 verbunden. Die dem Sekundärteil 3 zugewandten Begrenzungsflächen der an dem ersten Kernteil 14 angeordneten Abschnitte der Zähne 5 schließen jeweils in Umfangsrichtung Pf in gerader Verlängerung an die dazu benachbarten, dem Sekundärteil 3 zugewandten Begrenzungsflächen der Polschuhe an.

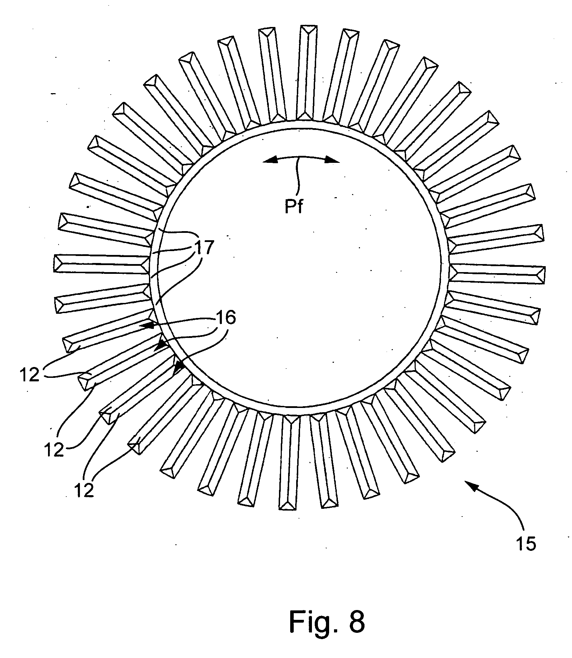

In Fig. 7 ist erkennbar, dass die Polschuhe 12 durch Querstege 17 einstückig miteinander verbunden sind, die am radial inneren und äußeren Rand des zweiten Kernteils 15 angeordnet sind und in Umfangsrichtung Pf umlaufen. Wie in Fig. 8 erkennbar ist, können die Querstege 17 auch nur am inneren Rand des zweiten Kernteils 15 angeordnet sein. An den radial äußeren Enden der Polschuhe 12 sind bei diesem Ausführungsbeispiel keine Querstege 17 vorgesehen.

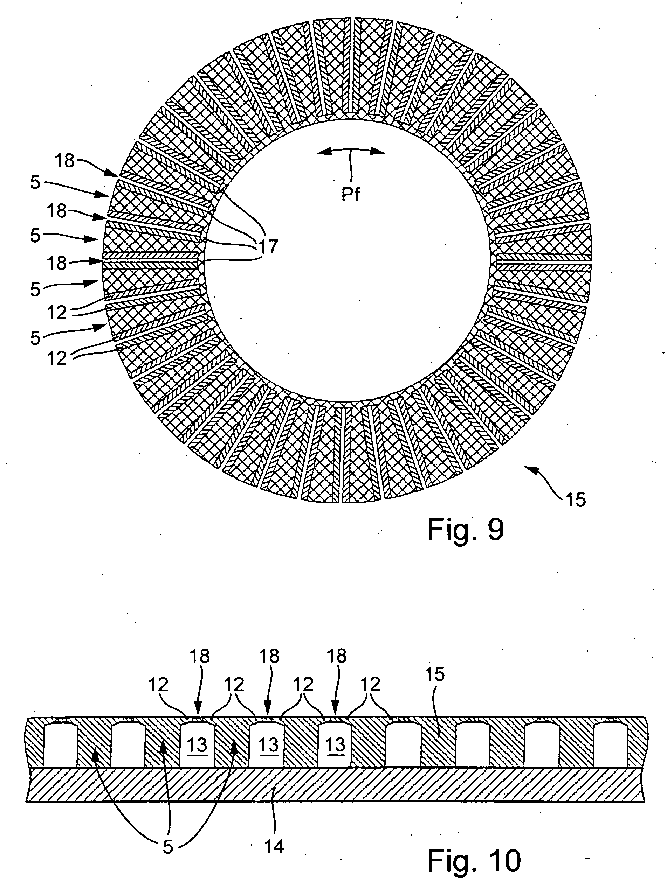

Bei dem Ausführungsbeispiel nach Fig. 9 und 10 ist zwischen den Polschuhen 12 der einzelnen Nuten 13 jeweils ein Nutschlitz 18 angeordnet, der sich in radialer Richtung jeweils entlang der gesamten Länge der ihm zugeordneten Nut 13 erstreckt. Ähnlich wie bei dem Ausführungsbeispiel nach Fig. 3 ist auch hier das Volumen der Zähne 5 vollständig in dem zweiten Kernteil angeordnet.

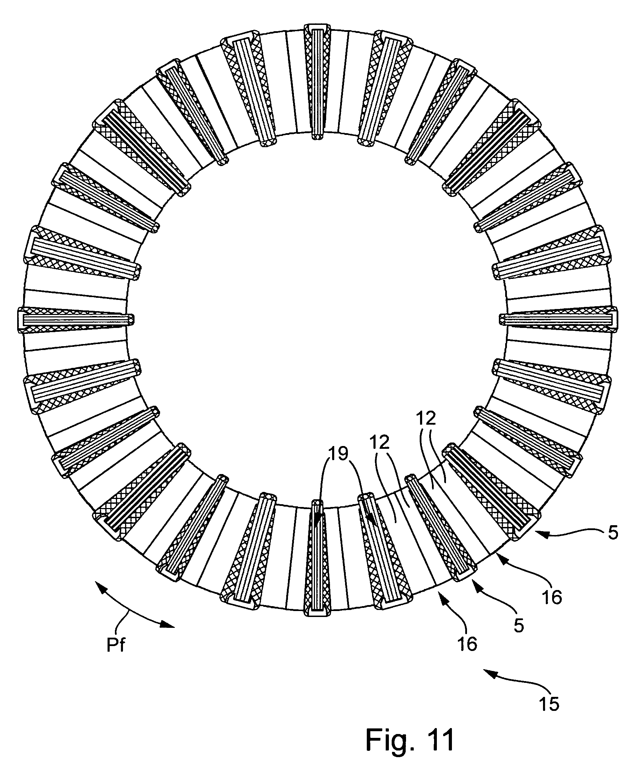

Bei den in Fig. 11 bis 14 gezeigten Ausführungsbeispielen weist das zweite Kemteil 15 als Blechpakete ausgebildete Blecheinlagen 19 auf, die mit einem elektrisch isolierenden Kunststoff umspritzt sind, in eine Vielzahl von pulverförmigen weichmagnetischen Partikeln eingebettet sind, die in der Zeichnung nicht näher dargestellt sind. In Fig. 12 und 13 ist erkennbar, dass die Blecheinlagen 19 jeweils mehrere Blechschichten 20 aufweisen, die etwa radial zur Rotationsachse der Welle 9 und in Axialrichtung der Welle 9 verlaufen. Zwischen den in Umfangsrichtung zueinander benachbarten Blechschichten 20 der einzelnen Blecheinlagen 19 ist jeweils eine dünne elektrisch isolierende Schicht angeordnet, die als Oberflächenbeschichtung auf die Blechschichten 20 aufgebracht sein kann.

Bei dem Ausführungsbeispiel nach Fig. 12 weisen die Blecheinlagen 19, ausgehend von ihrem inneren, der Welle 9 zugewandten Ende zu ihrem äußeren, der Welle 9 abgewandten Ende in Umfangsrichtung eine etwa konstante Wandstärke auf. Bei dem Ausführungsbeispiel nach Fig. 12 nimmt die Wandstärke der Blecheinlagen 19, ausgehend von ihrem inneren zu ihrem äußeren Ende hin zu.

In Fig. 12 und 13 ist erkennbar, dass die Blecheinlagen 19 an ihren radial inneren und äußeren Endabschnitten in Umfangsrichtung Pf weisende, freiliegende Stellen haben, die nicht mit dem die weichmagnetischen Partikel enthaltenen Kunststoff bedeckt sind. An diesen Stellen werden die Blecheinlagen 19 während des Umspritzens mit dem die weichmagnetischen Partikel enthaltenen Kunststoff in einer Spritzgussform fixiert.

Vorzugsweise wird während des Spritzgussvorgangs ein starkes Magnetfeld durch den Bereich der Zähne 5 geleitet. Hierdurch werden die weichmagnetischen Partikel im Kunststoff in den Zahnbereich gezogen und dort in ihrer Vorzugsrichtung ausgerichtet. In dem Bereich zwischen den äußeren, der Welle 9 abgewandten Zahnenden nimmt die Konzentration der weichmagnetischen Partikel in Umfangsrichtung vom Rand der Nut 13 zur Mittellinie der Nut 13 hin ab. Hierdurch wird der Streufluss in diesem Bereich reduziert.

Auch bei den Ausführungsbeispielen nach Fig. 11 bis 14 sind die den einzelnen Nuten 13 jeweils zugeordneten Polschuhe 12 der beidseits der Nuten 13 angeordneten Zähne 5 an ihren einander zugewandten Endbereichen einstückig miteinander verbunden. Dabei nimmt die axiale Wandstärke der Polschuhe 12, jeweils in Umfangsrichtung Pf ausgehend vom Rand der Nut 13 zu einer von den Rändern der Nut 13 beabstandeten, zwischen den Rändern befindichen Stelle der Nut 13 hin ab. Bei dem in Fig. 13 und 14 gezeigten Ausführungsbeispiel sind aneinander angrenzende Polschuhe 12 jeweils durch mehrere, radial zur Rotationsachse der Welle 9 voneinander beabstandete, in Umfangsrichtung verlaufende Querstege 17 miteinander verbunden.

Bei dem Ausführungsbeispiel nach Fig. 11 und 12 ist nur jeder zweite Zahn 5 bewickelt. Dabei weisen die bewickelten Zähne 5 im Bereich ihrer Polschuhe 12 in Umfangsrichtung Pf eine größere Breite auf als die unbewickelten Zähne 5. Auch in ihrem zwischen den Polschuhen 12 und dem Jochbereich befindlichen Abschnitt weisen die bewickelten Zähne 5 in Umfangsrichtung Pf eine größere Breite auf als die unbewickeften Zähne 5. Im Vergleich zu einer elektrischen Maschine, bei der alle Zähne 5 bewickelt sind, wird ein größerer Nutfüllfaktor ermöglicht.

Erwähnt werden soll noch, dass sich die Erfindung besonders für Axiafflussmaschinen mit kleinen Außendurchmesser und tiefen Nuten (>2 mm) eignet.

### Bezugszeichenliste

- 1: elektrische Maschine
- 2: Primärteil
- 3: Sekundärteil
- 4: Wicklung
- 5: Zahn
- 6: Gehäusetopf
- 7: Rotorteil
- 8: Wälzlagerung
- 9: Welle
- 10: Permanentmagnet
- 11: Luftspalt
- 12: Polschuh
- 13: Nut
- 14: erstes Kernteil
- 15: zweites Kernteil
- 16: Vertiefung
- 17: Quersteg
- 18: Nutschlitz
- 19: Blecheinlage
- 20: Blechschicht
- Pf: Umfangsrichtung

## Patentansprüche

1. Bürstenlose elektrische Maschine (1), die als Scheibenläufer mit einem Primärteil (2) und einem Sekundärteil (3) ausgebildet ist, wobei das Primärteil (2) einen weichmagnetischen Kern und eine Wicklung (4) aufweist, wobei der weichmagnetische Kern einen Jochbereich und damit verbundene Zähne (5) hat, die Polschuhe (12) aufweisen, welche zwischen den Zähnen (5) gebildete Nuten (13) überdecken, und wobei das Sekundärteil (3) Permanentmagnete (10) mit mehreren in einer Ebene angeordneten Polen aufweist, **dadurch gekennzeichnet, dass** der weichmagnetische Kern ein erstes, zumindest den Jochbereich aufweisendes Kernteil (14) und ein damit verbundenes zweites, zumindest die Polschuhe (12) aufweisendes Kernteil (15) hat, dass das erste Kernteil (14) als Ringbandkern ausgebildet ist, und dass das zweite Kernteil (15) als Formkörper ausgebildet ist, der weichmagnetische Partikel enthält, zwischen denen ein elektrisch isolierender Werkstoff angeordnet ist.

2. Bürstenlose elektrische Maschine (1) nach Anspruch 1, **dadurch gekennzeichnet, dass** das zweite Kernteil (15) als Eisenpulverpressteil ausgebildet ist, das Eisenpulver-Partikel aufweist, die mit dem elektrisch isolierenden Werkstoff beschichtet sind.

3. Bürstenlose elektrische Maschine (1) nach Anspruch 2, **dadurch gekennzeichnet, dass** das zweite Kernteil (15) als Spritzgussteil ausgebildet ist, das in eine elektrisch isolierende Kunststoffmasse eingebettete, weichmagnetischen Partikel aufweist.

4. Bürstenlose elektrische Maschine (1) nach einem der Ansprüche 1 bis 3, **dadurch gekennzeichnet, dass** das zweite Kernteil (15) als vorzugsweise ringförmige Scheibe ausgebildet ist, die etwa parallel zur Erstreckungsebene des Sekundärteils (3) zwischen diesem und dem ersten Kernteil (14) angeordnet ist.

5. Bürstenlose elektrische Maschine (1) nach einem der Ansprüche 1 bis 4, **dadurch gekennzeichnet, dass** die einer Nut (13) jeweils zugeordneten Polschuhe (12) der beidseits der betreffenden Nut (13) angeordneten Zähne (5) an ihren einander zugewandten Endbereichen einstückig miteinander verbunden sind, und dass das zweite Kemteil (15) an seiner dem Sekundärteil (3) abgewandten Seite im Bereich dieser Polschuhe (12) jeweils eine Vertiefung (16) aufweist, an der die Wandstärke des zweiten Kernteils (15) jeweils in Umfangsrichtung (Pf) ausgehend vom Rand der Nut (13) zu dem davon beabstandeten Ende des Polschuhs (12) hin abnimmt.

6. Bürstenlose elektrische Maschine (1) nach einem der Ansprüche 1 bis 5, **dadurch gekennzeichnet, dass** die Vertiefungen (16) rillenförmig vorzugsweise mit keilförmigen Schrägen ausgebildet sind und etwa parallel zu den Zähnen (5) verlaufen.

7. Bürstenlose elektrische Maschine (1) nach einem der Ansprüche 1 bis 6, **dadurch gekennzeichnet, dass** die Wandstärke des zweiten Kernteils (15) entlang der Vertiefungen (16) jeweils ausgehend vom radial inneren zum radial äußeren Ende der Vertiefungen (16) hin abnimmt.

8. Bürstenlose elektrische Maschine (1) nach einem der Ansprüche 1 bis 7, **dadurch gekennzeichnet, dass** die rillenförmigen Vertiefungen (16) des zweiten Kernteils (15) mit einer verfestigten Vergussmasse geringer magnetischer Permeabilität befüllt sind.

9. Bürstenlose elektrische Maschine (1) nach einem der Ansprüche 1 bis 8, **dadurch gekennzeichnet, dass** die Zähne (5) jeweils vollständig an dem zweiten Kernteil (15) angeordnet sind und dass der Ringbandkern ungenutet ist und an seiner den Polschuhen (12) zugewandten Flachseite mit den von den Polschuhen (12) entfernten Enden der Zähne (5) verbunden ist.

10. Bürstenlose elektrische Maschine (1) nach einem der Ansprüche 1 bis 9, **dadurch gekennzeichnet, dass** Teilbereiche der Zähne (5) einstückig mit dem Jochbereich ausgebildet sind, und dass das erste Kernteil dazu an seiner dem Sekundärteil (3) zugewandten Flachseite Nuten (13) aufweist, zwischen denen diese Teilbereiche gebildet sind.

11. Bürstenlose elektrische Maschine (1) nach einem der Ansprüche 1 bis 10, **dadurch gekennzeichnet, dass** das zweite Kernteil (15) zwischen in Umfangsrichtung (Pf) zueinander benachbarten Vertiefungen (16) jeweils mindestens eine Unterbrechung aufweist, und dass die einstückig mit dem Jochbereich ausgebildeten Teilbereiche der Zähne (5) mit ihren freien Enden in die Unterbrechungen eingreifen.

12. Bürstenlose elektrische Maschine (1) nach einem der Ansprüche 1 bis 11, **dadurch gekennzeichnet, dass** die den einzelnen Nuten (13) zugeordneten Polschuhe (12) jeweils durch einen Nutschlitz voneinander beabstandet sind, und dass die Polschuhe (12) vorzugsweise am radial inneren und/oder äußeren Rand des zweiten Kernteils (15) durch wenigstens einen Quersteg einstückig miteinander verbunden sind.

13. Bürstenlose elektrische Maschine (1) nach einem der Ansprüche 1 bis 12, **dadurch gekennzeichnet, dass** das zweite Kernteil (15) vorzugsweise als Blechpakete ausgabildete weichmagnetische Blecheinlagen (19) aufweist, die vorzugsweise mit den weichmagnetischen Partikeln und dem zwischen ihnen befindlichen elektrisch isolierenden Werkstoff ummantelt sind.

14. Bürstenlose elektrische Maschine (1) nach einem der Ansprüche 1 bis 13, **dadurch gekennzeichnet, dass** die Nuten (18) mit einem elektrisch und magnetisch isolierenden, verfestigten Vergusswerkstoff befüllt sind, der die Kernteile (14, 15) und die Wicklung (4) fest miteinander verbindet.
